# EUROPÄISCHE PATENTSCHRIFT

(11) **EP 0 349 908 B1**
(45) Veröffentlichungstag und Bekanntmachung des Hinweises auf die Patenterteilung: **25.08.1993**
(21) Anmeldenummer: 89111886.1
(22) Anmeldetag: 30.06.1989
(51) Int. Cl.: A01F 12/44

(54) **Fördervorrichtung für eine Erntemaschine**
Conveying device for harvesting machines
Dispositif transporteur pour une moissonneuse

(30) Priorität: 05.07.1988 DE 3822689
(43) Veröffentlichungstag der Anmeldung: 10.01.1990
(73) Patentinhaber: DEERE & COMPANY, Moline, Illinois 61265 (US)
(72) Erfinder: Klimmer, Josef, D-6660 Zweibrücken (DE); Hagerer, Paul, Dr., D-6660 Zweibrücken (DE)
(74) Vertreter: Feldmann, Bernhard

(56) Entgegenhaltungen:
- EP-A- 0 087 488
- EP-A- 0 178 018
- EP-A- 0 212 183
- EP-A- 0 310 938
- EP-A- 0 312 655
- DE-A- 2 504 069
- DE-A- 2 638 240
- DE-U- 8 800 121
- FR-A- 2 161 137
- FR-A- 2 236 407
- Soviet Inventions Illustrated,Woche 8517,juni 85 Nr.85-104121/17,Derwent Publications Ltd,London, &SU-A-11 19 630(ARBUZOV) 23-10-1984

## Beschreibung

Die Erfindung betrifft eine Fördervorrichtung für eine Erntemaschine, insbesondere für einen Mähdrescher, mit einer Aufgabeeinheit und einer Aufnahmeeinheit, wobei die Fördervorrichtung einen Förderboden aufweist, der mit Leitblechen versehen ist, die einen Gutstrom entlang des Förderbodens führen.

Bei einer Fördervorrichtung dieser Art in einem Mähdrescher (DE-GM 88 00 121) ist der Förderboden mit zwei Sätzen von Leitblechen bestückt, wobei die Leitbleche des einen Satzes in bezug auf den Förderboden starr und die des anderen Satzes beweglich sind; jedoch verlaufen alle Leitbleche eines Satzes zueinander parallel. Die beweglichen Leitbleche werden mittels einer Regelvorrichtung verschwenkt, wobei eine Abhängigkeit zwischen der seitlichen Neigung des Mähdreschers und der Stellung der beweglichen Abschnitte besteht. Die Verschwenkung dieser Leitbleche soll bei Hangarbeiten das von einer Dreschtrommel ausgedroschene Gut auf dem Weg über den Förderboden von der Talseite zur Hangseite fördern.

Fördervorrichtungen, die nach einem derartigen Prinzip arbeiten, setzen leicht fließfähiges und relativ sauberes Gut voraus, da ansonsten beim Übergang von den beweglichen zu den starren Leitblechen ein Stau entstehen kann.

Die der Erfindung zugrunde liegende Aufgabe wird darin gesehen, eine Fördervorrichtung zu schaffen, mit deren Hilfe auch bei seitlicher Neigung des Förderbodens verunreinigtes inhomogenes Gut ohne Gutstau gefördert werden kann, ohne daß sich dieses beim Übergang auf die Aufnahmeeinheit an der Talseite der Aufnahmeeinheit anlagert.

Diese Aufgabe ist erfindungsgemäß durch die Merkmale des Patentanspruchs 1 gelöst worden, wobei in den Unteransprüchen die Lösung weiterentwickelnde Merkmale angegeben sind.

Auf diese Weise wird das Gut ebenfalls von der Talseite im Bereich der Aufgabeeinheit - normalerweise eine Dreschtrommel mit einem Dreschkorb - zur Bergseite im Bereich der Aufnahmeeinheit geleitet; der Gutstrom selbst wird aber nicht wie bei den schwenkbaren Leitblechen merklich umgelenkt. Die Staustellen sind somit entfallen. Vielmehr wird die seitliche Verlagerung des Gutes auf einer längeren Strecke bei einem geringen Seitenwinkel bewirkt. Es ist somit auch nur ein einziger Teil, nämlich der Förderboden, seitlich in der Förderebene zu verschwenken, was den gesamten Aufbau vereinfacht - allerdings soll dadurch nicht die Möglichkeit ausgeschlossen werden, den schwenkbaren Förderboden zusätzlich mit schwenkbaren Leitblechen zu versehen. Angesichts der eingangs beschriebenen Nachteile sollten diese Leitbleche aber nur in einem geringen Maße verschwenkt werden. Im einfachsten Fall könnte eine Verstellung des Förderbodens mittels eines Gestänges oder eines Bodenzugs erfolgen.

Wenn auch der Förderboden nahe der Mitte seiner Länge in oder auf dem Lager gehalten sein könnte, so ist die Wirkung doch am größten, wenn sich die Schwenkachse so weit wie möglich an dem aufgabeseitigen Ende befindet.

Soll die größtmögliche Fläche zwischen der Aufgabeeinheit und der Aufnahmeeinheit für Förderzwecke zur Verfügung stehen, dann ist der Förderboden in der Förderebene konisch oder trapezförmig auszubilden, wobei sich das breite Ende an der Aufgabeeinheit und das schmale Ende an der Aufnahmeeinheit befindet.

Zur Vermeidung von Gutstauungen aufgrund sich verengender Förderräume zwischen den Leitblechen sind alle Leitbleche in der Förderrichtung gleichmäßig divergierend angeordnet.

Wenn Erntemaschinen serienmäßig so gebaut sein sollen, daß sie nur bedarfsweise für einen Hangeinsatz aus- oder nachrüstbar sind, dann kann dies dadurch geschehen, daß der Förderboden in einer Förderwanne oder in einem Förderrahmen untergebracht wird, die wahlweise mit einem schwenkbaren oder einem nicht schwenkbaren Förderboden ausgestattet werden. Die Antriebselemente greifen dann also nur noch mittelbar an dem Förderboden an.

Zur Vermeidung langwieriger und den sich schnell ändernden Erntebedingungen nicht gerecht werdender Einstellprozeduren ist eine automatische Regelvorrichtung vorgesehen, die Eingangssignale von Fühlern erhält und Ausgangssignale an einen oder mehrere Motoren zum Verstellen des Förderbodens abgibt. Vorteilhafterweise werden Elektromotoren verwendet; allerdings sind auch Hydraulik- und Pneumatikmotoren für diese Aufgabe geeignet. Die Fühler können reine Neigungsfühler sein; es kann sich aber auch um Fühler handeln, die von ungleichmäßiger Gutstromverteilung herrührende Gutstromverluste erfassen. Eine ausführliche Beschreibung einer geeigneten Regelvorrichtung findet sich in der deutschen Patentanmeldung 37 33 619.

Der Motor bleibt unberührt von den Oszillationsbewegungen, denen der Förderboden normalerweise unterworfen ist, wenn er an der Förderwanne bzw. dem Förderrahmen und dem Förderboden angreift, so daß nur die Energiezuführleitung im Ausmaß der Oszillationsbewegung flexibel auszubilden ist.

Wenn die Regelvorrichtung mit einem programmierbaren Kleinrechner ausgestattet ist, kann auf die verschiedenen Erntebedingungen Rücksicht genommen werden und der Förderboden bei ansonsten gleichen Bedingungen unterschiedlich weit verschwenkt werden. So kann z. B. bei grobem, leichtem Gut anders geschwenkt werden als bei feinkörnigem, schwerem. Es kann ein Verzögerungskreis eingeschaltet werden, der verhindert, daß nicht bereits bei Bodenunebenheiten ein Regelvorgang abläuft. Außerdem ist eine Programmierung des Schwenkverhaltens am Ende eines Feldes beim Wendevorgang möglich, da sich dort die Erntemaschine in eine andere Richtung neigt, aber eine ungleichmäßige Verteilung auf dem Förderboden noch von der vorherigen Neigung für eine bestimmte Nachlaufzeit vorhanden ist.

Zur Vermeidung von Erntegutverlusten zwischen dem Förderboden und dem ihn umgebenden Gehäuse, insbesondere aber auch um das Eindringen von Erntegut zwischen den Förderboden und die Förderwanne zu verhindern, ist vorzugsweise an den äußeren Leitblechen eine flexible Dichtung vorgesehen.

In der Zeichnung ist ein nachfolgend näher beschriebenes Ausführungsbeispiel der Erfindung dargestellt. Es zeigt:
- Fig. 1: eine Erntemaschine in vereinfachter Darstellung und in Seitenansicht,
- Fig. 2: eine erfindungsgemäße Fördervorrichtung in Draufsicht und
- Fig. 3: die Fördervorrichtung aus Fig. 2 in Vorderansicht.

Eine Erntemaschine 10 in der Art eines Mähdreschers stützt sich über vordere und rückwärtige Räder 12, 14 auf dem Boden ab und folgt somit den Bodenkonturen bzw. dessen Neigung. Die Bedienung der Erntemaschine 10 erfolgt durch einen Fahrer von einer Fahrerkabine 16 aus und erstreckt sich im wesentlichen auf eine optimale Erntegutaufnahme unter Beachtung der möglichen Geschwindigkeit und der hinnehmbaren Verluste. Hinter der Fahrerkabine 16 befindet sich ein Sammelbehälter 18 für das abgeschiedene Gut, d. h. bei einem Mähdrescher Getreide oder sonstiger Samen, wobei das Gut über ein Auslaufrohr 20 einem Anhänger aufgegeben werden kann. Die Erntemaschine 10 enthält zudem ein Gehäuse 22, innerhalb dessen eine Aufgabeeinheit 25, bestehend aus einer Dreschtrommel 24 und einem Dreschkorb 26, eine Wendetrommel 28, mehrere Strohschüttler 30, eine erfindungsgemäße Fördervorrichtung 32, eine Aufnahmeeinheit 34 und ein Gebläse 36 untergebracht sind. Das von einer nicht gezeigten Aufnahmevorrichtung, z. B. einem Schneidwerk oder einem Pflückvorsatz, aufgenommene Gut wird dem Gehäuse 22 über einen Schrägförderer 38 zugeführt und dort mittels der vorgenannten Komponenten bearbeitet.

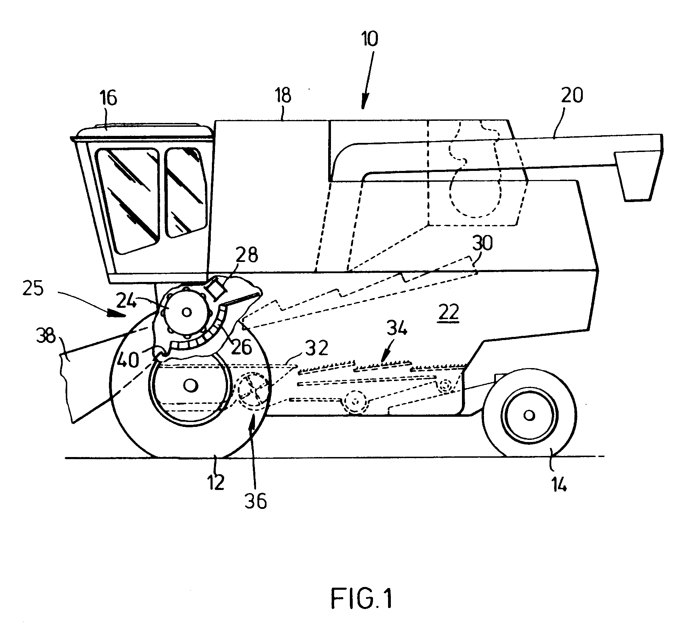

Die Aufgabeeinheit 25 erstreckt sich über die gesamte Breite des Gehäuses 22 und wird normalerweise, d. h. bei der Fahrt auf im wesentlichen waagrechtem Boden, auch über die gesamte Breite gleichmäßig mit auszudreschendem Gut beschickt. In bekannter Weise ist der Dreschkorb 26 mit Öffnungen versehen, so daß das ausgedroschene Gut durch diese auf die Fördervorrichtung 32 in deren vorderen Bereich aufgegeben werden kann. Gut, das mittels der Strohschüttler 30 abgeschieden wird, wird ebenfalls von den in Figur 1 links gelegenen Enden der Strohschüttler 30 aus auf den vorderen, zumindest aber auf den mittleren Bereich der Fördervorrichtung 32 geworfen. Die Fördervorrichtung 32 fördert wie herkömmliche Fördervorrichtungen auch das ausgedroschene Gut, das noch mit Verunreinigungen, Stroh, Ährenteilen usw. vermengt ist, in Figur 1 von links nach rechts, d. h. von der Aufgabeeinheit 25 zu der Aufnahmeeinheit 34, die bei einem Mähdrescher von Sieben gebildet werden, die das brauchbare von dem unbrauchbaren Gut trennen. Zur Trennung wird mittels des Gebläses 36 ein Luftstrom erzeugt, der durch die Aufnahmeeinheit 34 geblasen wird und die in der Regel leichteren, unbrauchbaren Bestandteile des Gutgemischs am rückwärtigen und in Figur 1 rechts gelegenen Ende der Erntemaschine 10 auswirft.

Die Trennkapazität und -funktion der Aufnahmeeinheit 34 ist jedoch stark abhängig von der Gleichmäßigkeit der Belegung der Aufnahmeeinheit 34. Während bei der Arbeit auf im wesentlichen horizontalem Gelände die Aufnahmeeinheit 34 gleichmäßig mit zu reinigendem Gut belegt ist, tritt bei der Hangarbeit, d. h. bei geneigtem Gelände, eine Verlagerung des zu reinigenden Guts zur Talseite hin ein. Diese ungleichmäßige Belegung bei Hangfahrt hat zur Folge, daß der von dem Gebläse 36 erzeugte Luftstrom den Weg des geringsten Widerstandes geht und dort durch die Aufnahmeeinheit 34 strömt, wo sich kein Gut befindet. Daraus folgt, daß der Gutstrom ungereinigt über die Aufnahmeeinheit 34 befördert wird und, da er ein zu großes Volumen hat, auch nicht von der Aufnahmeeinheit 34 hindurch dem Sammelbehälter 18 weitergeleitet werden kann. Vielmehr wird ein Teil des Gutstromes die Aufnahmeeinheit 34 am Ende des Gehäuses 22 verlassen und auf den Boden fallen und ist somit verloren. Die Menge dieses verlorenen Erntegutes kann über nicht gezeigte Fühler erfaßt und einer ebenfalls nicht gezeigten Regelvorrichtung zugeführt werden.

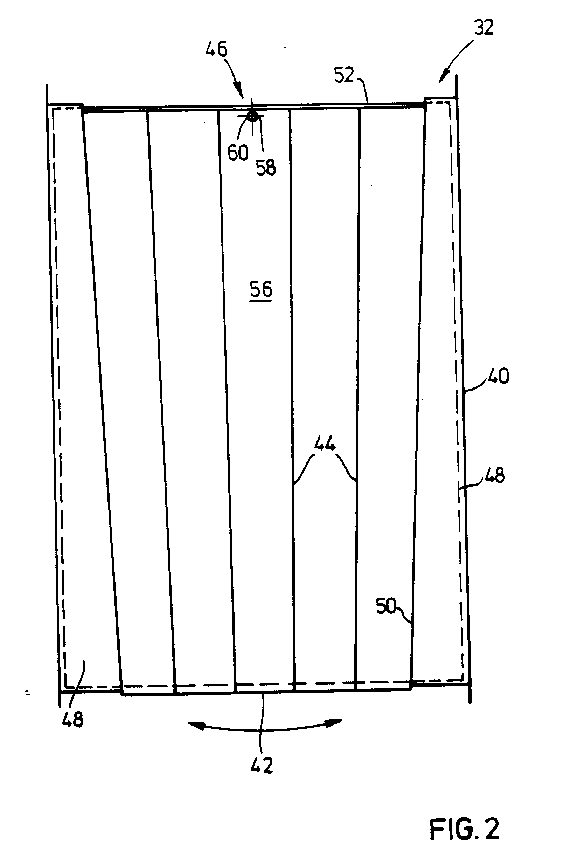

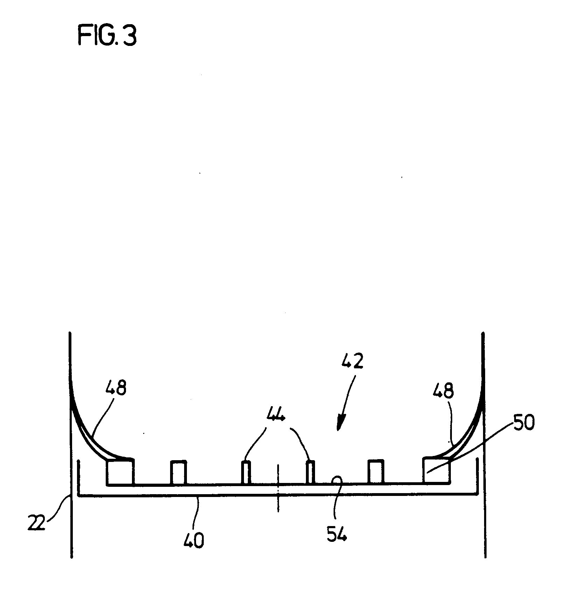

Zur Vermeidung der vorgenannten Gutverluste ist die Fördervorrichtung 32 gemäß den Figuren 2 und 3 ausgebildet.

Die erfindungsgemäe Fördervorrichtung 32 setzt sich demnach im wesentlichen aus einer Förderwanne 40, einem Förderboden 42 mit Leitblechen 44, einem Lager 46 und Dichtungen 48 zusammen.

Die Förderwanne 40 ist auf herkömmliche und daher nicht gezeigte Weise innerhalb des Gehäuses 22 aufgehängt und wird in der Art eines Schwingförderers derart oszillierend bewegt, daß sich ein von der Aufgabeeinheit 25 erhaltener Gutstrom in Figur 1 nach rechts bewegt und auf diesem Weg aufgelockert wird. Bei einem herkömmlichen Mähdrescher wäre diese Förderwanne 40 mit einem geriffelten Bodenblech und mit den Leitblechen 44 bestückt. Bei dieser Fördervorrichtung 32 jedoch ist im vorderen, nahe der Aufgabeeinheit 25 gelegenen Bereich auf halber Breite ein Lagerzapfen 58 des Lagers 46 an der Förderwanne 40 befestigt, z. B. eingeschraubt oder aufgeschweißt. Die Lagerachse, um die der Förderboden 42 schwenken kann, erstreckt sich senkrecht zu der Förderebene und somit zu dem nicht näher bezeichneten Bodenblech der Förderwanne 40. Die Förderwanne 40 erstreckt sich über die gesamte Breite innerhalb des Gehäuses 22, wobei selbstverständlich ein geringes Spiel zwischen beiden erhalten bleibt.

Anstatt der Förderwanne 40 könnte auch ein Förderrahmen vorgesehen werden, in den der Förderboden 42 eingehängt wird oder auf den er aufgesetzt wird. Auch bei einem derartigen Förderrahmen kann der Förderboden 42 durch einen starren Förderboden ersetzt werden.

Die Förderwanne 40 hat gegenüber dem Förderrahmen den Vorteil, daß in dem Falle, daß kein verschwenkbarer Förderboden 42 verwendet werden soll, auf den Wannenboden starre Leitbleche und Riffelbleche leicht aufsetzbar sind.

Der Förderboden 42 ist ebenfalls in der Form einer Wanne ausgebildet und von trapezförmiger Gestalt, wobei die schmale Endseite nahe der Aufnahmeeinheit 34 und die breite Endseite nahe der Aufgabeeinheit 25 gelegen ist. Zur Fertigung des Förderbodens 42 wird eine ebenfalls trapezförmige Blechtafel in ihren Außenbereichen und in dem vorderen Endbereich nach oben gebogen, um Seitenwände 50 und eine Stirnwand 52 zu bilden, die in den Eckbereichen miteinander verschweißt werden und somit eine Bodenplatte 54 an drei Seiten stabil umgeben. Anschließend werden auf die Bodenplatte 54 nicht gezeigte, geriffelte Bodenbleche und die Leitbleche 44 aufgesetzt, und zwar punktgeschweißt, genietet oder geschraubt. Sich zwischen den Leitblechen 44 bzw. zwischen den Leitblechen 44 und den Seitenwänden 50 ergebende Förderräume 56 weisen an den jeweiligen Enden gleiche Weiten auf, so daß auf die gesamte Länge des Förderbodens 42 eine gleichmäßige, aber geringe Verengung in der Förderrichtung eintritt, die den Gutstromfluß nicht oder allenfalls unmerklich behindert. In vorderen Endbereich ist auf der halben Breite des Förderbodens 42 eine Öffnung 60 vorgesehen, die in sich den Lagerzapfen 58 schwenkbeweglich aufnimmt. Der Förderboden 42 kann also um den Lagerzapfen 58 in der Bildebene der Figur 2 schwenken, und zwar so weit, bis die Seitenwände 50 in den jeweiligen Endstellungen an der Förderwanne 40 anliegen. Es ist ersichtlich, daß durch die seitliche Abschrägung des Förderbodens 42 dessen Schwenkmaß beeinflußt werden kann.

Insbesondere aus Figur 3 geht hervor, wie der Förderboden 42 in der Förderwanne 40 gelagert ist und daß sich von den Seitenwänden 50 aus die Dichtungen 48 bis an die Innenflächen des Gehäuses 22 erstrecken. Die Dichtungen 48 sind ausreichend flexibel, um sich der jeweiligen Stellung des Förderbodens 42 anpassen zu können, und verhindern, daß Gut zwischen den Förderboden 42 und die Förderwanne 40 gerät. Je nach der Beschaffenheit des Materials der Dichtungen 48 kann vorgesehen werden, die Seitenwände 52 in ihrem oberen Bereich leicht nach außen abzukröpfen und die Dichtung 48 auf dem abgekröpften Bereich zu befestigen. In diesem Falle kann der Förderboden 42 auch aus einer rechteckförmigen Blechplatte gebogen werden.

Zur Verstellung des Förderbodens 42 gegenüber der Förderwanne 40 ist eine nicht gezeigte Regelvorrichtung mit einem oder mehreren Motoren, insbesondere Elektromotoren, unterhalb der Förderwanne 40 vorgesehen. Zu diesem Zweck ist nahe dem aufnahmeseitigen Ende in die Förderwanne 40 eine nicht gezeigte Öffnung eingebracht, durch die der oder die Motoren an dem Förderboden 42 angreifen und ihn verschwenken können. Wird anstatt der Förderwanne 40 ein Förderrahmen verwendet, kann die Öffnung entfallen.

Eine ausführliche Beschreibung einer Regelvorrichtung findet sich in der deutschen Patentanmeldung 37 33 619, die durch diesen Bezug in diese Patentanmeldung aufgenommen wird. Eine weitere und ausführliche Beschreibung erübrigt sich daher.

Die Funktion der erfindungsgemäßen Fördervorrichtung 32 ergibt sich demnach wie folgt.

Sobald die Erntemaschine 10 für einen Erntevorgang über ein Feld bewegt wird, gibt die Aufgabeeinheit 25 einen Gutstrom auf den Förderboden 42 der Fördervorrichtung 32 ab. Bewegt sich die Erntemaschine 10 auf einem Hang, wird die Regelvorrichtung dies mittels eines Neigungsfühlers oder anhand von Gutverlusten am Ende der Aufnahmeeinheit 34 feststellen und ein Ausgangssignal für den oder die Motoren bilden. Nimmt man an, daß sich aufgrund der Hangfahrt der Gutstrom mit Blick auf Figur 2 auf der linken Seite der Fördervorrichtung 32 stärker als auf deren rechter Seite ansammelt, dann wird der Förderboden 42 ebenfalls mit Blick auf Figur 2 entgegen dem Uhrzeigerdrehsinn geschwenkt, d. h. das abgabeseitige Ende bewegt sich nach rechts und somit zu der Bergseite hin. Der Übergang auf die Aufnahmeeinheit 34 erfolgt demnach mit einem Versatz in Richtung auf die Bergseite, so daß der Gutstrom auf dem Weg über die Aufnahmeeinheit 34 sich in gleichmäßiger Belegung zur Talseite bewegen kann. Ein Erntegutverlust tritt also nicht ein.

Sobald die Erntemaschine 10 wieder in waagrechtem Gelände fährt, nimmt der Föderboden 42 wieder eine Mittenstellung ein.

Wie in der zuvor erwähnten Patentanmeldung ausführlich beschrieben ist, kann ein Verstellvorgang des Förderbodens 42 auch dann erfolgen, wenn Gutverluste aufgrund ungleichmäßiger Beschickung der Aufnahmeeinheit 34 zu besorgen sind, z. B. wenn nicht die gesamte Erntebreite des Vorsatzes genutzt wird, wenn der Schrägförderer 38 ungleichmäßig fördert oder der Spalt zwischen dem Dreschkorb 26 und der Dreschtrommel 24 ungleichmäßig groß ist.

Selbstverständlich ist die Anwendung einer derartigen Fördervorrichtung 32 nicht auf einen Mähdrescher oder eine fahrbare Erntemaschine beschränkt, sondern es ist auch denkbar, daß sie bei Kartoffel-, Erbsen- oder Karottenvollerntern benutzt wird. Auch bei einer stationären Maschine mit ständig wechselndem Standort kann anstatt eines Neigungsausgleichs ein schwenkbarer Förderboden 42 vorgesehen werden. Zudem können alle Sortieranlagen mit mehreren hintereinander geschalteten Förderern in Betracht kommen, z. B. Müll- und Postsortieranlagen mit unterschiedlicher Beschickung. Anwendungsgebiete finden sich also überall dort, wo eine Maschine mit einer Förderanlage Gut an eine andere Vorrichtung abgibt, bei der es auf eine gleichmäßige Belegung ankommt.

## Patentansprüche

1. Fördervorrichtung (32) für eine Erntemaschine (10), insbesondere für einen Mähdrescher, mit einer Aufgabeeinheit (25) und einer Aufnahmeeinheit (34), wobei die Fördervorrichtung einen Förderboden (42) aufweist, der mit Leitblechen (44) versehen ist, die einen Gutstrom entlang des Förderbodens (42) führen, dadurch gekennzeichnet, daß der Förderboden (42) in der Förderebene um ein Lager (46) schwenkbar ist.

2. Fördervorrichtung nach Anspruch 1, dadurch gekennzeichnet, daß das Lager (46) in einem Bereich nahe der Aufgabeeinheit (25) vorgesehen ist.

3. Fördervorrichtung nach Anspruch 1 oder 2, dadurch gekennzeichnet, daß der Förderboden (42) eine trapezförmige Förderfläche aufweist.

4. Fördervorrichtung nach Anspruch 3, dadurch gekennzeichnet, daß sich die Leitbleche (44) in Richtung von der Aufgabeeinheit (25) zu der Aufnahmeeinheit (34) divergierend erstrecken.

5. Fördervorrichtung nach einem oder mehreren der vorherigen Ansprüche, dadurch gekennzeichnet, daß der Förderboden (42) in einer Förderwanne (40) oder in einem Förderrahmen gelagert und das Lager (46) an der Förderwanne (40) angebracht ist.

6. Fördervorrichtung nach einem oder mehreren der vorherigen Ansprüche, wobei eine automatische Regelungsvorrichtung zum Verschwenken des Förderbodens (42) vorgesehen ist.

7. Fördervorrichtung nach Anspruch 6, wobei die Regelungsvorrichtung einen Fühler für die seitliche Neigung des Förderbodens (42) und/oder für Gutstromverluste enthält.

8. Fördervorrichtung nach Anspruch 6 oder 7, wobei die Regelungsvorrichtung mindestens einen Motor zum Verschwenken des Förderbodens (42) enthält.

9. Fördervorrichtung nach Anspruch 8, dadurch gekennzeichnet, daß der Motor einenends an dem Förderboden (42) und anderenends an der Förderwanne (40) oder an dem Förderrahmen angreift.

10. Fördervorrichtung nach einem oder mehreren der Ansprüche 6 bis 9, dadurch gekennzeichnet, daß die Regelungsvorrichtung mit einem programmierbaren Kleinrechner versehen ist.

11. Fördervorrichtung nach einem oder mehreren der vorherigen Ansprüche, wobei der Förderboden (42) innerhalb eines Gehäuses (22) oszillierend bewegt wird, dadurch gekennzeichnet, daß sich zwischen den äußeren Leitblechen (44) oder einer Seitenwand (50) des Förderbodens (42) und der Innenfläche des Gehäuses (22) jeweils eine Dichtung (48) erstreckt.

12. Fördervorrichtung nach Anspruch 11, dadurch gekennzeichnet, daß die Dichtung (48) an dem äußeren Leitblech (44) oder einer Seitenwand (50) des Förderbodens (42) befestigt ist.

13. Fördervorrichtung nach einem oder mehreren der vorherigen Ansprüche, dadurch gekennzeichnet, daß der schwenkbare Förderboden (42) gegen einen starr einsetzbaren Förderboden austauschbar ist.

## Claims

1. Conveyor device (32) for a harvesting machine (10), more particularly for a combine harvester, having a delivery unit (25) and a receiving unit (34), the conveyor device having a conveyor base (42) which is provided with guide plates (44) which guide a flow of material along the conveyor base (42), characterised in that the conveyor base (42) is pivotable in the plane of conveyance about a bearing (46).

2. Conveyor device according to claim 1, characterised in that the bearing (46) is provided in an area near the delivery unit (25).

3. Conveyor device according to claim 1 or 2, characterised in that the conveyor base (42) has a trapezoidal conveyor surface.

4. Conveyor device according to claim 3, characterised in that the guide plates (44) extend divergingly in the direction leading from the delivery unit (25) to the receiving unit (34).

5. Conveyor device according to one or more of the foregoing claims, characterised in that the conveyor base (42) is mounted in a conveyor trough (40) or in a conveyor frame, and the bearing (46) is attached to the conveyor trough (40).

6. Conveyor device according to one or more of the foregoing claims, wherein an automatic regulating device is provided in order to pivot the conveyor base (42).

7. Conveyor device according to claim 6, wherein the regulating device includes a sensor for the lateral inclination of the conveyor base (42) and/or for losses of the flow of material.

8. Conveyor device according to claim 6 or 7, wherein the regulating device includes at least one motor for pivoting the conveyor base (42).

9. Conveyor device according to claim 8, characterised in that the motor engages at one end on the conveyor base (42) and at the other end on the conveyor trough (40) or on the conveyor frame.

10. Conveyor device according to one or more of claims 6 to 9, characterised in that the regulating device is provided with a programmable minicomputer.

11. Conveyor device according to one or more of the foregoing claims, the conveyor base (42) being moved in an oscillatory manner within a casing (22), characterised in that a seal (48) extends in each case between the outer guide plates (44) or a side wall (50) of the conveyor base (42) and the inner surface of the casing (22).

12. Conveyor device according to claim 11, characterised in that the seal (48) is attached to the outer guide plate (44) or to a side wall (50) of the conveyor base (42).

13. Conveyor device according to one or more of the foregoing claims, characterised in that the pivotal conveyor base (42) may be exchanged for a rigidly insertable conveyor base.

## Revendications

1. Dispositif transporteur (32) pour une récolteuse (10), notamment une moissonneuse-batteuse, pourvue d'une unité de chargement (25) et d'une unité de réception (34), le dispositif transporteur présentant un fond transporteur (42) qui est pourvu de tôles de guidage (44) qui guident un flux de produit le long du fond transporteur (42), **caractérisé** en ce que le fond transporteur (42) peut pivoter dans le plan de transport autour d'un palier (46).

2. Dispositif transporteur selon la revendication 1, **caractérisé** en ce que le palier (46) est prévu dans une région proche de l'unité de chargement (25).

3. Dispositif transporteur selon la revendication 1 ou 2, **caractérisé** en ce que le fond transporteur (42) présente une surface de transport trapézoïdale.

4. Dispositif transporteur selon la revendication 3, **caractérisé** en ce que les tôles de guidage (44) s'étendent de façon divergente dans une direction allant de l'unité de chargement (25) à l'unité de réception (34).

5. Dispositif transporteur selon l'une quelconque des revendications précédentes, **caractérisé** en ce que le fond transporteur (42) est monté dans un berceau de transporteur (40) ou dans un bâti de transporteur, et le palier (46) est monté sur le berceau de transporteur (40).

6. Dispositif transporteur selon l'une quelconque des revendications précédentes, **dans lequel** un dispositif de régulation automatique est prévu pour le pivotement du fond transporteur (42).

7. Dispositif transporteur selon la revendication 6, **dans lequel** le dispositif de régulation comprend un capteur pour l'inclinaison latérale du fond transporteur (42) et/ou pour les pertes de flux de produit.

8. Dispositif transporteur selon la revendication 6 ou 7, **dans lequel** le dispositif de régulation comprend au moins un moteur pour le pivotement du fond transporteur (42).

9. Dispositif transporteur selon la revendication 8, **caractérisé** en ce que le moteur agit à une extrémité sur le fond transporteur (42) et à l'autre extrémité sur le berceau de transporteur (40) ou le bâti de transporteur.

10. Dispositif transporteur selon l'une quelconque des revendications 6 à 9, **caractérisé** en ce que le dispositif de régulation est pourvu d'un micro-ordinateur programmable.

11. Dispositif transporteur selon l'une quelconque des revendications précédentes, dans lequel le fond transporteur (42) est déplacé en oscillations à l'intérieur d'un carter (22), **caractérisé** en ce qu'une garniture d'étanchéité respective (48) s'étend entre les tôles de guidage extérieures (44), ou une paroi latérale (50) du fond transporteur (42), et la face intérieure du carter (22).

12. Dispositif transporteur selon la revendication 11, **caractérisé** en ce que la garniture d'étanchéité (48) est fixée sur la tôle de guidage extérieure (44) ou sur une paroi latérale (50) du fond transporteur (42).

13. Dispositif transporteur selon l'une quelconque des revendications précédentes, **caractérisé** en ce que le fond transporteur pivotant (42) peut être remplacé par un fond transporteur pouvant être utilisé fixement.
